# EUROPÄISCHE PATENTSCHRIFT

(11) **EP 1 776 027 B1**
(45) Veröffentlichungstag und Bekanntmachung des Hinweises auf die Patenterteilung: **14.12.2011**
(21) Anmeldenummer: 05775933.4
(22) Anmeldetag: 28.07.2005
(51) Int. Cl.: A47J 31/46

(54) **GETRÄNKEBEREITER UND AUSLAUFEINRICHTUNG FÜR EINEN GETRÄNKEBEREITER**
BEVERAGE PREPARER AND DISPENSING DEVICE FOR A BEVERAGE PREPARER
PREPARATEUR DE BOISSONS ET DISPOSITIF D'ECOULEMENT ASSOCIE

(30) Priorität: 04.08.2004 DE 102004037876
(43) Veröffentlichungstag der Anmeldung: 25.04.2007
(73) Patentinhaber: BSH Bosch und Siemens Hausgeräte GmbH, 81739 München (DE)
(72) Erfinder: FUGGER, Michael, 83342 Tacherting (DE)
(74) Vertreter: Dosterschill, Peter
(86) Internationale Anmeldenummer: PCT/EP2005/053685
(87) Internationale Veröffentlichungsnummer: WO 2006/015950

(56) Entgegenhaltungen:
- EP-A- 0 791 321
- DE-U- 1 699 922
- US-A- 4 869 158
- US-A- 5 161 455
- US-B1- 6 220 147

## Beschreibung

Die Erfindung betrifft einen Getränkebereiter gemäß dem Oberbegriff des Anspruches 1.

Bei bekannten Espresso-Vollautomaten dieser Art, die überwiegend in Haushalten benutzt werden, ist frontseitig eine Nische zum Einstellen von Auffanggefä-βen wie Tassen auf die Trägerfläche des darunter liegenden Trägerteils vorhanden. Der Trägerteil benötigt eine gewisse Bauhöhe zur Aufnahme einer Tropfschale für Restwasser und um für die Standfestigkeit des Gerätes stabil zu sein. Das über der Nische vorspringende Kopfteil des Gerätes benötigt eine gewisse Höhe zur Unterbringung von Funktionsbauteilen wie z.B. einer Brühgruppe und von Bedienelementen an seiner Frontseite. Das Gerätegehäuse darf jedoch insgesamt nicht zu hoch sein um auf einer Küchen-Arbeitsplatte, unter einem Küchen-Oberschrank stehen zu können und dabei zur Bedienung bequem zugänglich zu sein. Die Gehäusegröße spielt auch bei den Herstellungskosten und für die Transport- und Verpackungskosten eine Rolle. Die Nische kann daher nur eine begrenzte Höhe besitzen.

Um Temperaturverluste und ein Verspritzen oder Danebengehen des Getränks z.B. durch einen tanzenden Strahl zu vermeiden, ist es zweckmäßig, die freie Fallhöhe des Getränks zwischen der Auslauföffnung und der Oberfläche des Getränks im Auffangbehälter möglichst gering zu halten. Hierzu ist bei den Espresso-Vollautomaten meist ein Auslaufteil mit der Auslauföffnung höhenverschiebbar geführt um den Auslauf an die Höhe unterschiedlicher, auf die Trägerfläche gestellter Gefäße anzupassen. Dazu dienen z. B. Teleskoprohre, die eine gewisse Bauhöhe für eine stabile Führung brauchen, wodurch die für Auffanggefäße nutzbare Höhe der Nische ebenfalls eingeschränkt wird.

Nun werden für Kaffee zum Teil auch Auffanggefäße verwendet, die größer sind als eine normale Kaffeetasse, insbesondere sehr hohe Gläser, z.B. so genannte Latte- Macchiato- Gläser, die nicht unter übliche Ausläufe solcher Espressogeräte passen sondern allenfalls bei manchen Geräten schräg von unten auf diese "aufgefädelt" werden können. Dies ist sehr unbequem in der Handhabung und der Auslauf kann in das Getränk eintauchen, was den Auslauf außen ver schmutzt und eventuell unhygienisch ist. Die Verwendung hoher Auffanggefäße ist also bei diesen Geräten unbequem wenn nicht unmöglich.

Die EP 0 791 321 A1 offenbart eine Espresso-Kaffeemaschine mit einer Emulgiervorrichtung zum Milchschäumen, wobei die Emulgiervorrichtung gezielt nahe an eine Kaffeeausgießöffnung oder in eine Stellung außerhalb des Tabletts zwecks Füllen von Gefäßen verschiedener Größe gebracht werden kann.

Zudem offenbart die US 6,220,147 ein Verfahren und eine Vorrichtung zum Brühen von u.a. Tee mit einem Ausgaberohr das schwenkbar an einem Filter angebracht ist, um eine Vielzahl von unterschiedlichen Positionen zu erreichen, so dass verschieden große Gläser, die vor bzw. neben der Vorrichtung stehen, befüllt werden können.

Auch die US 4,869,158 offenbart einen Kaffeeautomat, mit dem Gefäße, die unterhalb des Brühtrichters Platz finden, wie auch größere Gefäße, die vor dem Automaten stehen, befüllt werden können. Hierzu weist der Auslass einen passenden Zapfhahn, der ein verlängertes Rohr trägt, auf.

Es sind ferner so genannte Filterträger-Espressomaschinen für Haushalt oder Gewerbe bekannt, die einen abnehmbaren Filterträger besitzen, in den das Kaffeemehl oder eine Kaffeemehlpatrone eingegeben werden. Der Auslauf ist am Filterträger ausgebildet und nicht höhenverstellbar und mündet meist in einer Höhe über der Trägerfläche, die großen Tassen angepasst ist. Hier ist die Verwendung eines höheren Auffanggefäßes nicht möglich.

Der Erfindung liegt die Aufgabe zugrunde, einen Getränkebereiter nach dem Oberbegriff des Anspruches 1 oder zu schaffen, der die Nachteile des bekannten Standes der Technik vermeiden und insbesondere die Befüllung sehr unterschiedlich hoher Auffanggefäße; insbesondere sehr hoher Auffanggefäße wie Latte Macchiato-Gläser, direkt mit dem Getränkebereiter ermöglichen oder erleichtern.

Diese Aufgabe wird durch die Merkmalskombination des Anspruches 1 gelöst. Ein hohes Auffanggefäß kann dann tiefer, außerhalb der Nische, unter dem Auslauf, auf der Stellfläche stehen, auf der das Gerät steht. Diese Lösung hat den Vorteil, dass auf einfache, kostengünstige Weise und mit geringem Fertigungsaufwand der Nutzen des Gerätes bei bequemer Bedienung erweitert wird.

Man nimmt die kleine Unbequemlichkeit einer Verschmutzung der das Gerät tragenden Stellfläche für diesen Fall in Kauf, um eine wesentliche Erweiterung der Nutzbarkeit des Gerätes zu erzielen. Um aus dem Auslauf nachtropfendes Getränk aufzufangen, kann das Gerät bei der Entnahme des hohen Gefäßes auch sofort in seine normale Betriebsposition zurückgestellt werden. Dies gilt auch für Doppelausläufe mit zwei Auslauföffnungen.

Um die Bedienung besonders übersichtlich zu machen, kann sich die Auslauföffnung in ihrer zweiten Betriebsposition vor der Bedienseite bzw. Frontseite des Gerätes befinden, vor der senkrechten Projektion des Trägerteils.

Der Auslauf umfasst eine wahlweise aktivierbare Umleiteinrichtung mit einem quer zur Vertikalrichtung verlaufenden Umleitabschnitt, die in ihrem aktivierten Zustand das Getränk der Auslauföffnung in der zweiten Betriebsposition zuführt. Eine solche Umleiteinrichtung ist bequem zu bedienen und kann zur Reinigung leicht abnehmbar gestaltet sein. Die Umleiteinrichtung kann dabei entweder ein an das Gerät ansetzbares Zusatzteil, auch ein Nachrüstteil, sein oder als Teil des Gerätes zwischen einer aktivierten Stellung und einer Ruhestellung bewegbar, insbesondere schwenkbar, am Gerät gehaltert sein, wodurch sie jederzeit griffbereit und schnell einsetzbar ist und nicht verloren geht. Bei einer schwenkbaren Umleiteinrichtung kann die Schwenkachse sich etwa horizontal, benachbart einem über der Trägerfläche nach unten führenden Teil des übrigen Auslaufs, z.B. einem Ablaufrohr, erstrecken. Die Umleiteinrichtung-kann in diesem Fall zur Deaktivierung zum Teil hinter den übrigen Auslauf nach oben klappbar sein, wodurch eine längere Umleiteinrichtung, die in der aktivierten Stellung weit nach vorn herausragt, in einer Nische begrenzter Höhe unterbringbar ist.

Die Umleiteinrichtung kann das Getränk aus der Auslauföffnung der ersten Betriebsstellung aufnehmen und der Auslauföffnung der zweiten Betriebsstellung zuführen. Dies ergibt baulich einfache Ausführungsformen. Auch ist die Bedienung in diesem Fall besonders einfach, da bei der Umstellung keine Teile abgenommen werden müssen.

Die vertikale Schwenkachse eines solchen Auslaufs kann zur Mitte der Stellfläche versetzt angeordnet sein, damit die Auslauföffnung sich in ihrer ersten Betriebsposition in einem mittleren Bereich der Trägerfläche befindet. Bei einem Doppelauslauf können zwei nebeneinander angeordnete Umleiteinrichtungen getrennt oder gelenkig miteinander gekoppelt, zusammen um zwei parallele, vertikale Achsen Schwenkbar sein.

Erfindungsgemäß weist der Auslauf ein abnehmbares Auslaufteil mit der Auslauföffnung der ersten Betriebsposition auf und die Umleiteinrichtung ist an Stelle des abnehmbaren Auslaufteils ansetzbar. Dies erlaubt z. B. eine einfache Abnahme der Umleiteinrichtung zu Reinigungszwecken oder eine einfache Nachrüstung des Gerätes mit einer nachgekauften Umleiteinrichtung. Z.B. kann das abnehmbare Auslaufteil ein am übrigen Auslauf teleskopisch verschiebbares Auslaufrohr sein, das in der ersten Betriebsposition eine Anpassung der Höhe der Auslauföffnung an die Höhe der auf die Trägerfläche untergestellten Tasse erlaubt.

Gemäß einer zweckmäßigen Weiterbildung kann der Umleitabschnitt mindestens zum Teil als Ablaufrinne ausgebildet sein, was den Vorteil einer erleichterten Reinigung und einer erleichterten, kostengünstigen Herstellung als Spritzgußteil bietet.

Bei einem Getränkebereiter mit einem abnehmbaren Filterträger, der den Auslauf und einen Handgriff besitzt, weist die Umleiteinrichtung eine mit dem Handgriff zusammenwirkende Halteeinrichtung auf. So kann eine Maschine dieser Art auf einfache Weise umgerüstet bzw. nachgerüstet werden, wobei eine stabile Halterung der Umleiteinrichtung erreicht wird. Durch Schwenkung um ihre Anlagestelle am Handgriff kann die Umleiteinrichtung mit Hebelwirkung bequem an den Auslauf angesetzt werden.

Gemäß einer nicht erfindungsgemäßen Ausführungsform weist der Auslauf ein nach unten ragendes Ablaufrohr auf, das in seinem oberen Bereich ein Gelenk besitzt, an dem es um eine im Wesentlichen horizontale Achse abwinkelbar ist. Dies erlaubt eine besonders hohe Lage der Auslauföffnung in ihrer zweiten Betriebsposition und die Befüllung eines sehr hohen, vor den Trägerteil des Gerätes gestellten Auffanggefäßes. Ferner ist kein separates Zusatzteil erforderlich, das verloren gehen kann. Außerdem erlaubt diese Lösung eine gute, klare Formgestaltung. Vorzugsweise ist dabei das Ablaufrohr verlängerbar, insbesondere teleskopisch ausziehbar, um die Auslauföffnung in der zweiten Betriebsposition weit nach vorn zu bringen. Weiter kann das Ablaufrohr in seinem unteren Endbereich ein zweites Gelenk besitzt um die Auslauföffnung in der zweiten Betriebsposition nach unten zu richten.

Ein übergeordneter Gedanke der Lösung liegt darin, auf einfache, bequem handhabbare und kostengünstige Weise zu ermöglichen für den Sonderfall der Befüllung eines besonders hohen Gefäßes auf den Abschnitt des Trägerteils des Gerätes, der Tropfen auffängt zu verzichten und dadurch Höhe unter dem Auslauf zu gewinnen. Man nimmt die kleine Unbequemlichkeit einer Verschmutzung der das Gerät tragenden Stellfläche für diesen Fall in Kauf, um eine wesentliche Erweiterung der Nutzbarkeit des Gerätes zu erzielen. Um aus dem Auslauf nachtropfendes Getränk aufzufangen, kann das Gerät bei der Entnahme des hohen Gefäßes auch sofort in seine normale Betriebsposition zurückgestellt werden.

Im Folgenden wird die Erfindung anhand schematischer Zeichnungen an Ausführungsbeispielen näher erläutert.

Es zeigt:
- Fig. 1: eine Seitenansicht eines elektrischen Espresso-Vollautomaten;
- Fig. 2: in einem vergrößerten Maßstab, ausschnittsweise eine Vorderansicht mit einem Schnitt im wesentlichen entlang der Linie II-II in Fig.1, wobei zusätzlich die vorderen, unteren Ecken von zwei Lagerrippen weggebrochen sind um die Lagerung einer Umleiteinrichtung zu zeigen;
- Fig. 3: ausschnittsweise eine Seitenansicht eine nicht erfindungsgemäßen Ausführungsform;
- Fig. 4: ausschnittsweise eine Seitenansicht einer weiteren abgewandelte Ausführungsform mit einem vertikalen Schnitt durch eine angesetzte Umleiteinrichtung;
- Fig. 5: ausschnittsweise eine Seitenansicht einer weiteren abgewandelte Ausführungsform;
- Fig. 6: eine Seitenansicht eines nicht erfindungsmäßen elektrischen Espresso-Vollautomaten mit einem beweglichen Abschnitt des Trägerteils in der normalen Betriebsstellung und
- Fig. 7: eine ausschnittsweise Frontansicht des Espresso-Vollautomaten nach Fig. 6 mit eingeschobenem beweglichen Abschnitt und unter den Auslauf gestelltem Glasgefäß.

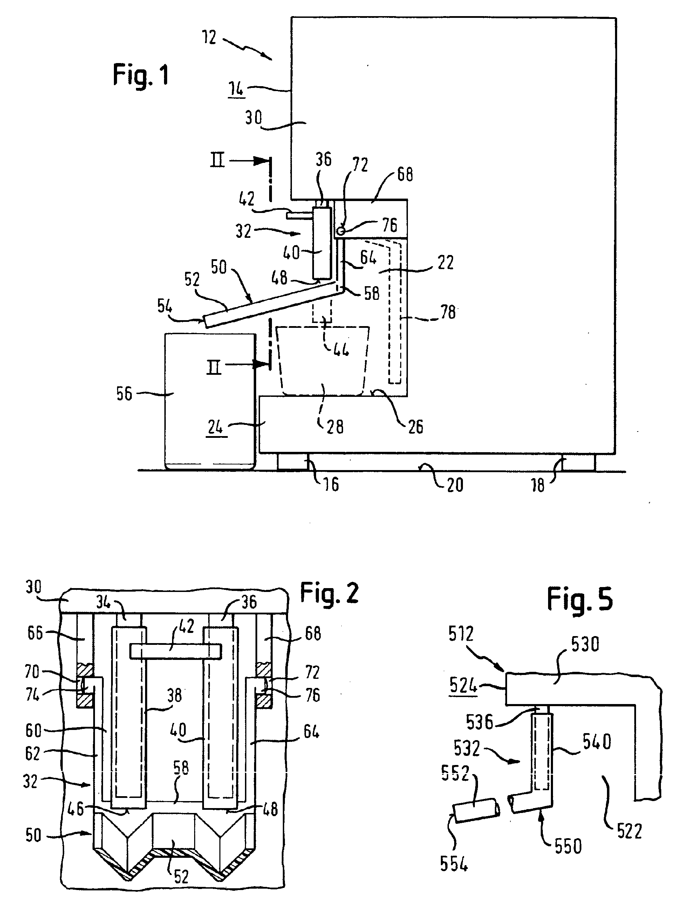

Der in den Figuren 1 und 2 dargestellte elektrische Espresso-Vollautomat 12 besitzt ein im wesentlichen säulenförmiges Gerätegehäuse 14, das mit Füßen 16 und 18 auf einer Stellfläche 20, z.B. der Oberfläche einer Küchen-Arbeitsplatte steht. Im Gerätegehäuse 14 sind ein Kaffeebohnenvorratsbehälter, ein Mahlwerk, ein Wasservorratsbehälter, ein Wassererhitzungssystem, eine Pumpe und eine Brüheinheit sowie Bedien- und Steuereinheiten angeordnet, die hier nicht dargestellt sind. Das Gerätegehäuse 14 besitzt an seiner in Fig. 1 nach links gewandten Frontseite eine sich über seine ganze Breite erstreckende, einen Teil seiner Höhe einnehmende Nische 22. Darunter besitzt das Gerätegehäuse 14 ein Trägerteil 24, dessen, die Nische 22 nach unten begrenzende Oberseite als Trägerfläche 26 für Auffanggefäße wie Tassen ausgebildet ist. In Fig.1 ist in unterbrochenen Linien 28 eine kleine Espressotasse angedeutet. Die horizontale Trägerfläche 26 besitzt in üblicher, hier nicht dargestellter Weise einen Gitterrost über einer Abtropfschale im Trägerteil 24.

Über der Nische 22 besitzt das Gerätegehäuse 14 einen nach vorn vorspringenden Kopfteil 30, von dessen Unterseite ein Doppel-Auslauf 32 vertikal nach unten in die Nische 22, im mittleren Bereich der Breitenerstreckung der Nische 22 und der Tiefenerstreckung der Trägerfläche 26 vorspringt. Dieser Doppelauslauf 32 besitzt zwei aus dem Kopfteil 30 austretende vertikale Innenrohre 34 und 36 auf denen Außenrohre 38 und 40 mit leichter Reibung höhenverschiebbar geführt sind. Die Außenrohre 38 und 40 sind an ihren unteren Enden offen und bilden Auslauföffnungen 46 und 48, die bei der in den Fig.1 und 2 dargestellten zweiten Betriebsstellung jedoch nicht als Auslauf in ein Auffanggefäß sondern zur Abgabe des Getränks in eine daruntergeschwenkte Umleiteinrichtung 50 dienen.

Die Außenrohre 38 und 40 sind durch einen nach vorn ragenden Handgriff 42 verbunden. Sie können damit, nach Verschwenken der Umleiteinrichtung 50 in ihre, in unterbrochenen Linien 74 angedeutete Ruhestellung, aus einer in Fig.1 in vollen Linien dargestellten obersten Höhenstellung, die zur Befüllung größerer Kaffeetassen oder zum Zusammenwirken mit der Umleiteinrichtung 50 dient, in eine in unterbrochenen Linien 44 dargestellte untere Höhenstellung zur spritzfreieren Befüllung kleiner Espressentassen 28 teleskopisch verschoben werden.

Die Umleiteinrichtung 50 besitzt einen, in ihrer in den Fig. 1 und 2 dargestellten aktivierten Stellung unter den Ausläufen 46 und 48 angeordneten Umleitabschnitt in Form einer nach oben offene Doppelrinne 52, die aus diesem Bereich schräg nach unten vorn aus der Nische 22 herausragt und nach vorn über den Trägerteil 24 vorspringt und an ihrem freien Ende offen ist um einen Doppelauslauf 54 zu bilden. Aus dem Doppelauslauf 54 kann der Kaffee in ein hohes Gefäß, z.B. ein Late-macchiato-Glas 56 abgegeben werden, das vor dem Trägerteil 24 auf der gleichen Stellfläche 20 steht, auf der die Espressomaschine mit ihren Füßen 16 und 18 steht. Das hintere Ende der Doppelrinne 52 ist durch eine, sich in der dargestellten aktivierten Stellung vertikal nach oben erstreckende Querwand 58 verschlossen, die aus einem Stück aus Kunststoff mit der Doppelrinne 52 hergestellt ist und einen großen oberen, zentralen Ausschnitt 60 besitzt, der rechts und links zwei vertikal nach oben führende Lagerarme 62 und 64 beläßt.

Vom Kopfteil 30 des Gehäuses 14 ragen zwei Lagerrippen über etwas weniger als die Hälfte der Höhe des Doppelauslaufes 32 nach unten und besitzen in ihren unteren Bereichen benachbart dem Doppelauslauf 32 jeweils eine zylindrische Lageröffnung 70 bzw. 72 in die die Lagerarme 62 und 64 mit zur Seite nach außen vorspringenden zylindrischen Lagerzapfen 74 und 76 eingreifen. Die Umleiteinrichtung 50 besteht aus einem elastischen Kunststoff und der Abstand der Lagerrippen 66 und 68 ist so bemessen daß die Lagerarme 62 und 64 leicht elastisch nach innen gedrückt werden, so daß sich eine Reibung ergibt, die die Umleiteinrichtung 50 in der eingestellten Klappstellung ausreichend festhält. Bei Nichtgebrauch kann die Umleiteinrichtung 50 in die in unterbrochenen Linien 74 dargestellte, inaktive Stellung geschwenkt werden, in der die Doppelrinne 52 sich vertikal vor der Rückseite der Nische 22 nach unten erstreckt. Durch Zusammendrücken der Lagerarme 62 und 64 können die Lagerzapfen 74 und 76 außer Eingriff mit den Lageröffnungen 70 und 72 gebracht werden, um die Umleiteinrichtung 50 zu Reinigungszwecken vom Gerät abzunehmen. Die offene Rinnenform erleichtert die Reinigung ganz wesentlich. In der aktivierten Stellung der Umleitrichtung 50 befinden sich die Außenrohre 38 und 40 des Doppelauslaufes 32 in ihrer obersten Stellung knapp über der Doppelrinne 52 um möglichst hoch über der Stellfläche 20 liegende Umleit-Ausläufe 54 zum Unterstellen eines hohen Auffanggefäßes zu erreichen. Die Doppelauslauföffnung 54 kann auch zwei Auffanggefäße nebeneinander befüllen.

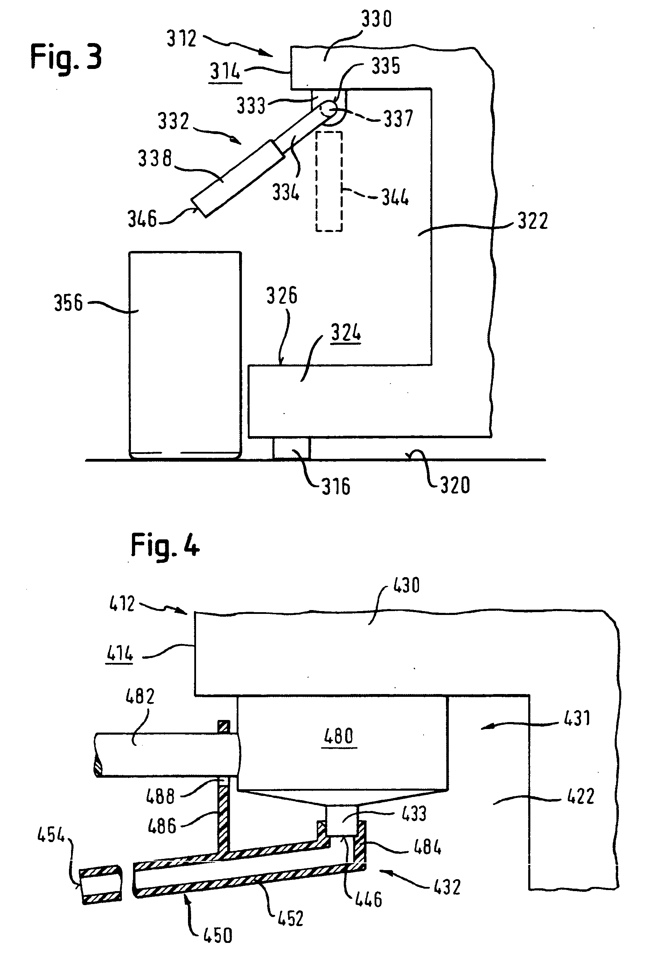

Der in Fig.3 dargestellte Espresso-Vollautomat 312 stimmt bis auf die geänderte Gestaltung des Getränke-Auslaufes mit dem Gerät gemäß den Fig. 1 und 2 überein und besitzt ein säulenförmiges Gerätesgehäuse 314 mit einer frontseitigen, über dessen ganze Breite durchgehenden Nische 322, die sich über einen unteren Teil der Höhe des Gerätegehäuses 314 erstreckt. Darunter besitzt das Gerätegehäuse 314 einen nach vorn vorspringenden Trägerteil 324 mit einer deckseitigen Trägerfläche 326 zum Aufsetzen von Auffanggefäßen wie Kaffeetassen. Über der Nische 322 besitzt das Gerätegehäuse 314 einen nach vorn vorspringenden Kopfteil 330. Von dessen Unterseite springt über dem mittleren Bereich der Trägerfläche 326 ein mit dem bereiteten Kaffee versorgter Auslaufstutzen 333 nach unten vor, der eine seitlich, horizontal austretende zylindrische Abgabeöffnung 335 besitzt. Ein einfacher Auslauf 332 zur Abgabe in jeweils nur ein untergestelltes Auffanggefäß besitzt ein Innenrohr 334 auf dem ein Außenrohr 338 teleskopisch, leicht klemmend geführt ist, das an seinem unteren Ende eine Auslauföffnung 346 besitzt. Das Innenrohr 334 besitzt einen rechtwinklig abgewinkelten oberen Endabschnitt der einen Zulauf- und Lagerstutzen 337 bildet und in die Abgabeöffnung 335 des Auslaufstutzens 333, zu Reinigungszwecken lösbar, eingesteckt ist. Die Abgabeöffnung 335 und der Lagerstutzen 337 bilden zusammen ein Schwenkgelenk mit einer horizontalen Achse, das es erlaubt den Auslauf 332 in die in Fig. 3 in vollen Linien dargestellte zweite Betriebsposition zu bringen in der sich die Auslauföffnung 346 des ausgezogenen Außenrohres 338 vor der vertikalen Projektion des Trägerteils 324 über einer Stellfläche 320, auf der das Gerät mit Füßen 316 steht, befindet. Dann kann ein hohes Auffanggefäß, z.B. ein hohes Glas 356 auf die Stellfläche 320 darunter gesetzt werden. In diesem Fall unterstützt die teleskopische Verlängerbarkeit des Auslaufes 332 das nach vorn Bringen der Auslauföffnung 346. Es ist ein sehr hohes Gefäß unterstellbar, da der Auslauf 332 auch noch weiter nach oben vorn geschwenkt werden kann als in Fig.3 dargestellt ist. In unterbrochenen Linien 344 ist das Außenrohr 338 in einer vertikal nach unten gerichteten ersten Betriebsposition dargestellt, wobei es zum Unterstellen einer größeren Kaffeetasse auf die Trägerfläche 326 maximal nach oben verschoben ist.

Die in Fig. 4 ausschnittsweise dargestellte Filterträger-Espressomaschine 412 besitzt ein Gerätegehäuse 414, das äußerlich ähnlich aufgebaut ist wie die Gerätegehäuse 14 und 314 der Ausführungsformen gemäß den Figuren 1 bis 3. Das Gerätegehäuse 414 besitzt eine frontseitige Nische 422 unter der ein nicht dargestelltes Trägerteil zum Aufsetzen von Auffanggefäßen wie Tassen nach vorn vorspringt und über der ein Kopfteil 430 nach vorn vorspringt. Im Gerätegehäuse 414 befinden sich in diesem Fall ein Wasservorratsbehälter und ein Wassererhitzungssystem sowie eine Pumpe, die das erhitzte Wasser durch den Kopfteil 430 einem an die Unterseite des Kopfteils 430 mittels eines Bajonettverschlusses angesetzten Filterträger 431 zuführt. Der Filterträger 431 besitzt eine Filterschale 480 mit einem nicht dargestellten Kaffeefilter, einem in der Betriebsstellung nach vorn ragenden Handgriff 482 sowie einem, einen Teil eines Auslaufs 432 bildenden, bodenseitigen Auslaufstutzen 433 mit einer Auslauföffnung 446 einer ersten Betriebsposition. Der Filterträger 431 wird im, vom Gerät abgenommem Zustand mit Kaffeemehl befüllt und mittels des Handgriffes 482 an der Unterseite des Kopfteils 430 verriegelt. Der Auslaufstutzen 433 befindet sich über dem nicht dargestellten Trägerteil bzw. dessen Trägerfläche für Tassen.

Um ein höheres Gefäß befüllen zu können gehört zu Auslauf 432 eine deaktivierbare, zusätzliche Umleiteinrichtung 450, die wahlweise an den Filterträger 431 ansetzbar ist. Die Umleiteinrichtung 450 besitzt einen Umleitabschnitt in Form eines leicht abfallend schräg nach unten vorn bis vor das nicht dargestellte Trägerteil führenden Umleitrohrs 452 mit einer frontseitigen Auslauföffnung 454 und einem an seinem hinteren Ende nach oben abgewinkelten Zulaufstutzen 484, der von unten auf den Ablaufstutzen 433 des Filterträgers 431 gesteckt ist. Die Umleiteinrichtung 450 besitzt ferner eine vom Umleitrohr 452 nach oben ragende Halteeinrichtung in Form eines Trägerbügels 486 der mit einer Durchgangsöffnung 488 auf den Handgriff 482 des Filterträgers 431 gesteckt ist. Die Umleiteinrichtung 450 ist ein Zusatzteil, das zu seiner Inbetriebnahme mit der Durchgangsöffnung 488 über den Handgriff 482 des Filterträgers 431 gesteckt und dann mit seinem Auslaufbereich nach unten geschwenkt wird um den Zulaufstutzen 484 über den Auslaufstutzen 433 der Filterschale 480 zu schieben.

In Abwandlung der Ausführungsform gemäß Figur 4 kann die Umleiteinrichtung zur Anpassung an verschiedene Kaffeemaschinen verstellbar gestaltet sein. Die Durchgangsöffnung des Trägerbügels kann relativ zum Umleitrohr höhenverstellbar sein. Der Zulaufstutzen kann einen größeren Zulauftrichter aufweisen zur Aufnahme von Ausläufen verschiedener Durchmesser und das Umleitrohr kann zur Anpassung an unterschiedlich tiefe Stellflächen teleskopisch verlängerbar sein.

Der in Figur 5 dargestellte elektrische Espresso-Vollautomat 512 stimmt bis auf die geänderte Gestaltung des Getränke-Auslaufes mit dem Gerät gemäß den Fig. 1 und 2 überein und besitzt ein Gerätegehäuse 514, das frontseitig eine Niesche 522 aufweist. Über der Nische 522 besitzt das Gerätegehäuse 514 einen nach vorn vorspringenden Kopfteil 530, von dessen Unterseite in die Nische 522 ein Auslauf 532 nach unten vorspringt. Dieser besitzt ein aus dem Kopfteil 530 austretendes, vertikales Innenrohr 536, auf das zur Bildung der ersten Betriebsposition, mit einer Auslauföffnung über einer Stellfläche der Espressomaschine, ein nicht dargestelltes Auslaufrohr, entsprechend dem Auslaufrohr 40 der Ausführungsform der Figuren 1 und 2, von unten teleskopisch aufschiebbar ist. In der in Fig. 5 dargestellten zweiten Betriebsposition ist das Auslaufrohr abgenommen und durch eine Umleiteinrichtung 550 ersetzt, die mit dem Gerät geliefert oder als Nachrüstteil erworben werden kann. Diese besitzt ein vertikal nach oben ragendes Führungsrohr 540, das leicht klemmend, teleskopisch auf das Innenrohr 536 aufgeschoben ist. Daran schließt unten ein in Fig. 5 verkürzt dargestellter Umleitabschnitt in Form eines Umleitrohrs 552 an, das schräg nach unten vorn abfallend aus der Nische 522 herausragt und nach vorn über einen nicht dargestellten Tassen-Trägerteil der Espressomaschine hinaus vorspringt und an seinem freien Ende eine Auslauföffnung 554 besitzt. Darunter kann ein hohes Auffanggefäß vor die Espressomaschine auf die Stellfläche gesetzt werden.

Um den Auslauf 532 in die erste Betriebsposition zur Getränkabgabe in ein auf der Stellfläche stehendes Gefäß zu bringen kann die Umleiteinrichtung 550 abgenommen und durch ein, nicht dargestelltes, an deren Stelle aufgestecktes gerades Auslaufrohr mit einer Auslauföffnung ersetzt werden. Jedoch kann, falls die Stellfläche groß genug ist, die Umleiteinrichtung 550 auch um das als Lager dienende, vertikale Innenrohr 536 um etwa 90 Winkelgrade geschwenkt werden. Die Auslauföffnung 554 befindet sich dann über der Stellfläche und stellt dann die Auslauföffnung der ersten Betriebsposition dar.

Gemäß einer nicht dargestellten Abwandlung der Ausführungsform gemäß Figur 5 kann die vertikale Achse des die Umleiteinrichtung tragenden und schwenkbar lagernden Innenrohrs so gegen die Mitte der Trägerfläche seitlich und/oder nach vorn versetzt aus dem Kopfteil 630 austreten, daß die Auslauföffnung in eine erste Betriebsposition über einem, auf den mittleren Bereich der Trägerfläche gesetzten Auffanggefäß und eine zweite Betriebsposition vor der vertikalen Projektion der Trägerfläche schwenkbar ist.

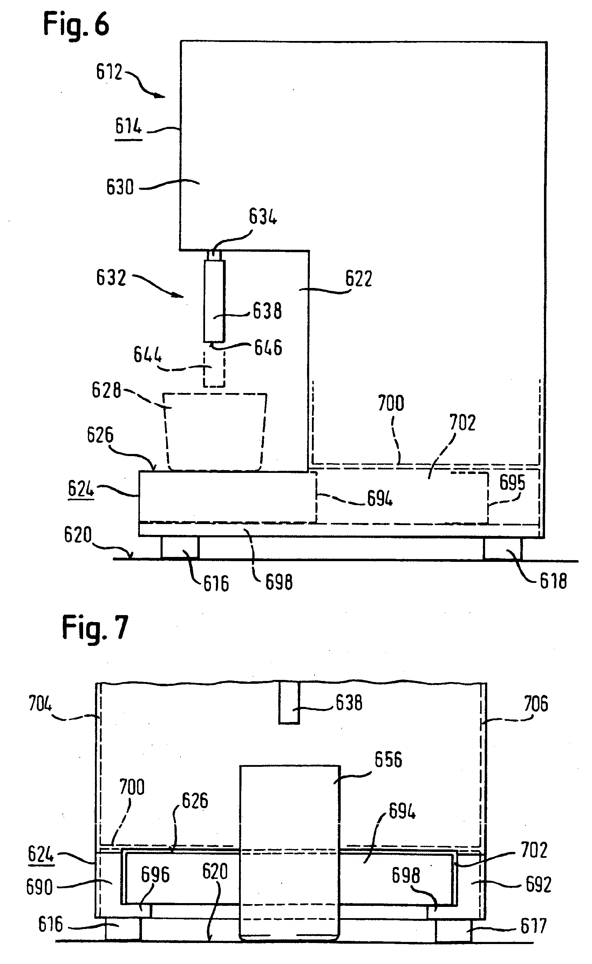

Der in den Figuren 6 und 7 dargestellte elektrische Espresso-Vollautomat 612 besitzt ein im wesentlichen säulenförmiges Gerätegehäuse 614, das mit Füßen 616,617 und 618 auf einer Stellfläche 620, z.B. der Oberfläche einer Küchen-Arbeitsplatte steht. Im Gerätegehäuse 614 sind ein Kaffeebohnenvorratsbehälter, ein Mahlwerk, ein Wasservorratsbehälter, ein Wassererhitzungssystem, eine Pumpe und eine Brüheinheit sowie Bedien- und Steuereinheiten angeordnet, die hier nicht dargestellt sind. Das Gerätegehäuse 614 besitzt an seiner in Fig. 6 nach links gewandten Frontseite eine sich über seine ganze Breite erstreckende, einen Teil seiner Höhe einnehmende Nische 622. Darunter besitzt das Gerätegehäuse 614 ein Trägerteil 624, dessen, die Nische 622 nach unten begrenzende, horizontale Oberseite als Trägerfläche 626 für Auffanggefäße wie Tassen ausgebildet ist. In Fig.6 ist in unterbrochenen Linien 628 eine kleine Espressotasse angedeutet. Der Trägerteil 624 enthält eine Abtropfschale 694 mit einem nicht dargestellten deckseitigen Gitterrost, der die Trägerfläche 626 bildet.

Über der Nische 622 besitzt das Gerätegehäuse 614 einen nach vorn vorspringenden Kopfteil 630, von dessen Unterseite ein Auslauf 632 vertikal nach unten in die Nische 622, im mittleren Bereich der Breitenerstreckung der Nische 622 und der Tiefenerstreckung der Trägerfläche 626 vorspringt. Dieser Auslauf 632 besitzt ein aus dem Kopfteil 630 austretendes vertikales Innenrohr 634 auf dem ein Außenrohr 638 mit leichter Reibung höhenverschiebbar geführt ist. Das Außenrohr 638 ist an seinem unteren Ende offen und bildet eine Auslauföffnung 646. Das Außenrohr 638 ist aus der in den Figuren 6 und 7 in vollen Linien dargestellten obersten Höhenstellung, in eine in unterbrochenen Linien 644 dargestellte untere Höhenstellung zur spritzfreieren Befüllung kleiner Espressotassen 628 teleskopisch verschiebbar.

Der Trägerteil 624 besitzt zwei am Gerätegehäuse 614 seitlich rechts und links außen, nach vorn vorspringende, die ganze Höhe des Trägerteils einnehmende Stützarme 690 und 692, die in ihrem vorderen Endbereich an der Unterseite die vorderen Füße 616 und 617 des Gerätegehäuses 614 tragen und letzterem einen stabilen Stand geben. Zwischen den Stützarmen 690 und 692 und auf, von deren unterem Bereich und dem unteren Bereich der Seitenwände 704 und 706 des übrigen Teils des Gerätegehäuses 614 gegeneinander, nach innen vorspringenden Tragrippen 696 und 698 ist die Abtropfschale 694 geführt. Aus der in Fig. 6 gezeigten, vorderen, aktiven Stellung kann die Abtropfschale 694, in die in Figur 7 gezeigte und in Figur 6 durch die unterbrochene Linie 695 angedeutete Stellung, nach hinten, in einen nach vorn offenen Gehäusehohlraum 702 im unteren Bereich des übrigen Gerätesgehäuses 614 unter einer Bodenwand 700, eingeschoben werden. Dann ist ein hohes Auffanggefäß 656, z.B. ein Latte-Macchiato-Glas zwischen die Stützarme 690 und 692, unter den Auslauf 632 auf die das Gerät 612 tragende Stellfläche 620 stellbar.

In Abwandlung der Ausführungsform gemäß den Figuren 6 und 7 kann die Abtropfschale auch nur seitlich von Stützfüßen geführt sein und zwischen den Füßen des Gerätegehäuses auf der Stellfläche stehen und verschiebbar sein, auf der das Gerät steht. Hierdurch kann Bauhöhe gespart werden.

### Bezugszeichen

### (Seite 1 von 2)

- 12: Espresso-Vollautomat
- 14: Gerätegehäuse
- 16: Fuß
- 18: Fuß
- 20: Stellfläche
- 22: Nische
- 24: Trägerteil
- 26: Trägerfläche
- 28: Espressotasse
- 30: Kopfteil
- 32: Doppelauslauf
- 34: Innenrohr
- 36: Innenrohr
- 38: Außenrohr
- 40: Außenrohr
- 42: Handgriff
- 44: untere Höhenstellung der Außenrohre
- 46: Auslauföffnung
- 48: Auslauföffnung
- 50: Umleiteinrichtung
- 52: Doppelrinne
- 54: Doppelauslauf
- 56: Latte-Macchiato-Glas
- 58: Querwand
- 60: Ausschnitt
- 62: Lagerarm
- 64: Lagerarm
- 66: Lagerrippe
- 68: Lagerrippe
- 70: Lageröffnung
- 72: Lageröffnung
- 74: Lagerzapfen
- 76: Lagerzapfen
- 78: Umleiteinrichtung in inaktiver Stellung

- 314: Gerätegehäuse
- 316: Fuß
- 320: Stellfläche
- 322: Nische
- 324: Trägerteil
- 326: Trägerfläche
- 330: Kopfteil
- 332: Auslauf
- 333: Auslaufstutzen
- 334: Innenrohr
- 335: Abgabeöffnung
- 337: Lagerstutzen
- 338: Außenrohr
- 344: erste Betriebsstellung des Außenrof
- 346: Auslauföffnung
- 356: Glas

- 412: Filterträger-Espressomaschine
- 414: Gerätegehäuse
- 422: Nische
- 430: Kopfteil
- 431: Filterträger
- 432: Auslauf
- 433: Auslaufstutzen
- 446: Auslauföffnung
- 450: Umleiteinrichtung
- 452: Umleitrohr
- 454: Auslauföffnung
- 480: Filterschale
- 482: Handgriff
- 484: Zulaufstutzen
- 486: Trägerbügel, Halteeinrichtung
- 488: Durchgangsöffnung

- 512: Espresso-Vollautomat
- 514: Gerätegehäuse
- 522: Nische
- 530: Kopfteil
- 532: Auslauf
- 536: Innenrohr
- 540: Führungsrohr
- 550: Umleiteinrichtung
- 552: Umleitrohr
- 554: Auslauföffnung

- 612: Espresso-Vollautomat
- 614: Gerätegehäuse
- 616: Fuß
- 617: Fuß
- 618: Fuß
- 620: Stellfläche
- 622: Nische
- 624: Trägerteil
- 626: Trägerfläche
- 628: Espressotasse
- 630: Kopfteil
- 632: Auslauf
- 634: Innenrohr
- 638: Außenrohr
- 644: untere Höhenstellung des Außenroh
- 646: Auslauföffnung
- 656: Glas
- 690: Stützarm
- 692: Stützarm
- 694: Abtropfschale
- 695: eingeschobene Stellung der Abtropf
- 696: Trägerrippe
- 698: Trägerrippe
- 700: Bodenwand
- 702: Gehäusehohlraum
- 704: Seitenwand
- 706: Seitenwand

## Patentansprüche

1. Getränkebereiter, insbesondere eine Kaffeemaschine (12; 312; 412; 512), mit einem, eine Trägerfläche (26; 326) für ein Auffanggefäß (28) aufweisenden Trägerteil (24; 324) und einem darüber angeordneten Getränk-Auslauf (32; 332; 432; 532) mit einer Auslauföffnung (46, 48; 54; 346; 446; 454; 554), wobei der Auslauf (32; 432; 532), so veränderbar ist, dass seine Auslauf-Öffnung aus einer ersten Betriebsposition über der Trägerfläche in eine zweite Betriebsposition außerhalb der vertikalen Projektion des Trägerteils (24; 324) bringbar ist und eine wahlweise aktivierbare Umleiteinrichtung (50; 450; 550) mit einem quer zur Vertikalrichtung verlaufenden Umleitabschnitt (52; 452; 552) umfasst, die in ihrem aktivierten Zustand das Getränk der Auslauföffnung (54; 454; 554) in der zweiten Betriebsposition zuführt, **dadurch gekennzeichnet, dass** der Auslauf (532) ein abnehmbares Auslaufteil mit der Auslauföffnung der ersten Betriebsposition aufweist und die Umleiteinrichtung (550) an Stelle des abnehmbaren Auslaufteils ansetzbar ist.

2. Getränkebereiter nach Anspruch 1, **dadurch gekennzeichnet, dass** die Umleiteinrichtung (50, 450, 550) zwischen einer aktivierten Stellung und einer Ruhestellung bewegbar, insbesondere schwenkbar, am Gerät (12) gehaltert ist.

3. Getränkebereiter nach Anspruch 2, **dadurch gekennzeichnet, dass** die Umleiteinrichtung (50, 450, 550) schwenkbar am Gerät (12) angelenkt ist und die Schwenkachse sich etwa horizontal, benachbart einem über der Trägerfläche (26) nach unten führenden Teil des übrigen Auslaufs (34, 36, 38, 40) erstreckt.

4. Getränkebereiter nach einem oder mehreren der Ansprüche 1 bis 3, **dadurch gekennzeichnet, dass** die Umleiteinrichtung (50; 450, 550) das Getränk aus der Auslauföffnung der ersten Betriebsstellung aufnimmt und der Auslauföffnung (54; 454) der zweiten Betriebsstellung zufürt.

5. Getränkebereiter nach einem oder mehreren der Ansprüche 1 bis 4, **dadurch gekennzeichnet, dass** das abnehmbare Auslaufteil ein am übrigen Auslauf (Innenrohr 536) teleskopisch verschiebbares Auslaufrohr ist.

6. Getränkebereiter nach einem der Ansprüche 1 bis 5, **dadurch gekennzeichnet, dass** der Umleitabschnitt mindestens zum Teil als offene Rinne (52) ausgebildet ist.

7. Getränkebereiter nach einem der Ansprüche 1, 2 oder 4 bis 6 mit einem abnehmbaren Filterträger (431), der den Auslauf (432, 433) und einen Handgriff (482) besitzt; **dadurch gekennzeichnet, dass** die Umleiteinrichtung (450) eine mit dem Handgriff (482) zusammenwirkende Halteeinrichtung (Trägerbügel 486) aufweist.

## Claims

1. Beverage maker, particularly a coffee machine (12; 312; 412; 512) with a support part (24; 324), which has a support surface (26; 326) for a collecting vessel (28), and a beverage outlet (32; 332; 432; 532), which is arranged thereabove, with an outlet opening (46, 48; 54; 346; 446, 454; 554), wherein the outlet (32; 432; 532) can be changed in such a manner that its outlet opening can be brought from a first operating position above the support surface into a second operating position outside the vertical projection of the support part (24; 324) and comprises a selectably activatable redirection device (50; 450; 550) with a redirecting section (52; 452; 552) which extends transversely to the vertical direction and which in its activated state feeds the beverage to the outlet opening (54; 454; 554) in the second operating position, **characterised in that** the outlet (532) comprises a removable outlet part with the outlet opening of the first operating position and the redirecting device (550) can be fitted in place of the removable outlet part.

2. Beverage maker according to claim 1, **characterised in that** the redirecting device (50, 450, 550) is mounted on the appliance (12) to be movable, particularly pivotable, between an activated setting and a rest setting.

3. Beverage maker according to claim 2, **characterised in that** the redirecting device (50, 450, 550) is pivotably articulated to the appliance (12) and the pivot axis extends approximately horizontally adjacent to a part, which leads downwardly over the support surface (26) of the remaining outlet (34, 36, 38, 40).

4. Beverage maker according to one or more of claims 1 to 3, **characterised in that** the redirecting device (50; 450; 550) receives the beverage from the outlet opening of the first operating setting and feeds it to the outlet opening (54; 454) of the second operating setting.

5. Beverage maker according to one or more of claims 1 to 4, **characterised in that** the removable outlet part is an outlet pipe telescopically displaceable at the rest of the outlet (inner pipe 536).

6. Beverage maker according to any one of claims 1 to 5, **characterised in that** the redirecting section is formed at least in part as an open channel (52).

7. Beverage maker according to any one of claims 1, 2 and 4 to 6, with a removable filter support (431) having the outlet (432, 433) and a handle (482), **characterised in that** the redirecting device (450) comprises a mounting device (support bracket 486) co-operating with the handle (482).

## Revendications

1. Préparateur de boissons, notamment machine à café (12 ; 312 ; 412 ; 512) comprenant une partie porteuse (24, 324) présentant une surface porteuse (26 ; 326) pour un récipient collecteur (28) et une sortie de boisson (32 ; 332 ; 432 ; 532) disposée au-dessus de la partie porteuse, munie d'une ouverture d'évacuation (46, 48 ; 54 ; 346 ; 446 ; 454 ; 554), la sortie (32, 432 ; 532) étant modifiable de manière à ce que son ouverture de sortie puisse être mise d'une première position de fonctionnement au-dessus de la surface porteuse dans une seconde position de fonctionnement située en dehors de la projection verticale de la partie porteuse (24 ; 324), et comprenant un dispositif de déviation (50 ; 450 ; 550) activable de manière sélective, muni d'une section de déviation (52 ; 452 ; 552) s'étendant transversalement à la direction verticale, laquelle section de déviation, dans son état activé, amène la boisson à l'ouverture d'évacuation (54 ; 454 ; 554) dans la seconde position de fonctionnement, **caractérisé en ce que** la sortie (532) présente une partie d'évacuation amovible avec l'ouverture de sortie de la première position de fonctionnement et **en ce que** le dispositif de déviation (550) peut être posé à la place de la partie de sortie amovible.

2. Préparateur de boissons selon la revendication 1, **caractérisé en ce que** le dispositif de déviation (50, 450, 550) est fixé sur l'appareil (12) en étant déplaçable, notamment en pouvant être pivoté, entre une position activée et une position de repos.

3. Préparateur de boissons selon la revendication 2, **caractérisé en ce que** le dispositif de déviation (50, 450, 550) est articulé de manière pivotante sur l'appareil (12) et **en ce que** l'axe de pivotement s'étend à peu près horizontalement, de manière voisine à une partie menant vers le bas du reste de la sortie (34, 36, 38, 40) au-dessus de la surface porteuse (26).

4. Préparateur de boissons selon l'une quelconque ou plusieurs des revendications 1 à 3, **caractérisé en ce que** le dispositif de déviation (50, 450, 550) recueille la boisson à partir de l'ouverture de sortie de la première position de fonctionnement et l'amène à l'ouverture de sortie (54 ; 454) de la seconde position de fonctionnement.

5. Préparateur de boissons selon l'une quelconque ou plusieurs des revendications 1 à 4, **caractérisé en ce que** la partie d'évacuation amovible est un tube d'évacuation coulissant de manière télescopique sur le reste de la sortie (tube intérieur 536).

6. Préparateur de boissons selon l'une quelconque des revendications 1 à 5, **caractérisé en ce que** la section de déviation est réalisée au moins en partie en tant que rigole ouverte (52).

7. Préparateur de boissons selon l'une quelconque des revendications 1, 2 ou 4 à 6, comprenant un porte-filtre amovible (431) qui possède la sortie (432, 443) et une poignée (482), **caractérisé en ce que** le dispositif de déviation (450) présente un dispositif de fixation (étrier porteur 486) coopérant avec la poignée (482).
